Europäisches Patentamt
European Patent Office
Office européen des brevets

(19) (11) Publication number: **0 050 501 A1**

(12) **EUROPEAN PATENT APPLICATION**

(21) Application number: **81304857.6**

(22) Date of filing: **19.10.81**

(51) Int. Cl.³: **C 08 J 3/22**, C 08 L 23/02

(30) Priority: **22.10.80 JP 148528/80**

(43) Date of publication of application: **28.04.82 Bulletin 82/17**

(84) Designated Contracting States: **BE DE FR IT**

(71) Applicant: **SUMITOMO CHEMICAL COMPANY, LIMITED, 15 Kitahama 5-chome Higashi-ku, Osaka-shi Osaka-fu (JP)**

(72) Inventor: **Ohmae, Tadayuki, 6-6, Hoshigoecho, Niihama-shi (JP)**
Inventor: **Nishibara, Hajime, 4-4, Shonaicho-6-chome, Niihama-shi (JP)**

(74) Representative: **Wharton, Peter Robert, Urquhart-Dykes & Lord 11th Floor Tower House Merrion Way, Leeds, LS2 8PB West Yorkshire (GB)**

(54) **Process for producing colored molded product of thermoplastic resin.**

(57) A process for producing colored molded product of thermoplastic resin excellent in gloss, color tone, transparency, uniformity and various fastnesses which comprises mixing (A) 100 parts by weight of a thermoplastic resin and (B) 0.01-20 parts by weight of a dyed product obtained by dyeing, with an anionic dyestuff, a copolymer of ethylene and one or more monomer(s) copolymerizable having a basic nitrogen or a composition comprising said copolymer and a metal salts of an organic carboxylic acid(s) and thereafter molding the mixture.

EP 0 050 501 A1

This invention relates to a process for producing colored molded products of thermoplastic resin. More particularly, this invention relates to a process for producing colored molded products of thermoplastic resins characterized by using an organic polymer type colorant finely dispersible and miscible into thermoplastic resins, excellent in heat stability at the time of molding and good in surface gloss and transparent feeling after molding.

It is well known that thermoplastic resins, in particular, polyolefins can be formed into fiber, rod, pipe, film, sheet, shaped article, bottle etc. having excellent physical and mechanical properties by various molding processes such as extrusion, injection molding, blow molding, melt-spinning and the like. However, since polyolefins are hydrophobic and chemically inert in their nature, they are difficult to color by dyeing or printing directly after molding. Thus, their colored molded products are usually produced by previously kneading various inorganic pigments into them and thereafter molding the mixture. In such a process of kneading for dispersion of inorganic pigments, however, the average particle size of dispersed pigment is not less than about 1-10 microns even when the effect of the kneading and

dispersing is great, so that such a process is not suitable for making very fine denier fiber products or molded products requiring surface gloss and transparent feeling. Further, in the case of reddish and yellowish color tones, the available pigments are limited in variety and high in price, which restricts the competitiveness and use field of the molded product.

Further, although the use of various organic pigments is also practised in some cases, they have problems in point of compatibility with polyolefins, heat stability, light resistance and the like. These organic pigments are high in cohesive force and, as the result, the size of dispersed particles attainable of the pigment in molded products is still about 1-10 microns.

On the other hand, a process which comprises mixing and kneading a polymer or polymer composition having functional groups capable of acting as fixation site of various dyestuffs with polyolefins to obtain a dyeable polyolefin composition and then molding and dyeing the composition is also frequently studied as mentioned in, for example, Japanese Patent Publication Nos. 22,523/67, 6,285/68, 25,953/79, 40,255/79, 1,302/80 and so on. However, such a process, comprising a forming and a subsequent dyeing, is practically applicable only to molded products such as fiber-formed or film-formed products and small-sized shaped products for the reason of equipment and

economicity and is inferior to the coloring process by mixing and kneading of inorganic pigment in respects of weather resistance, abrasion resistance, washing resistance etc. of the superficial dyed layer. Thus, its practical application involves a number of problems.

The present inventors conducted earnest studies to overcome the above-mentioned problems. As the results, it was found that a copolymer of ethylene and a monomer having basic nitrogen previously dyed with an anionic dyestuff can be dispersed into thermoplastic resins such as polyolefins as very finely as average particle size of the dispersed particles reaches 0.01 - 0.5 μ. This invention is based on this finding.

According to this invention, there is provided a process for producing a colored molded product which comprises mixing (A) 100 parts by weight of a thermoplastic resin and (B) 0.01 - 20 parts by weight of a dyed product obtained by dyeing, with an anionic dyestuff, a copolymer of ethylene and one or more monomer(s) having basic nitrogen copolymerizable with ethylene or a composition comprising said copolymer and a metal salt of an organic carboxylic acid, and then molding the mixture.

The first characteristic feature of this invention consists in that the dyed product according to this invention can be dispersed into thermoplastic resins in a very fine state so that the molded product

has a transparent feeling and a good surface gloss. The second characteristic feature of this invention consists in that the dyed product of this invention has so good a dispersibility that it is applicable to the coloration of all kinds of molded products ranging from very fine fiber (for example, about 5 denier) or stretched film having a thickness of about 10 microns to large-sized injection molded products. The third characteristic feature of this invention conssits in that, owing to the use of anionic dyestuff extensively used in the general dyeings of wool, nylon and the like, the color tone can be selected at will, the coloration can be carried out in much more colorful manner than that with inorganic pigments and the colored product of this process is superior in weather resistance, abrasion resistance and washing resistance to the product of the process according to a molding and a subsequent dyeing.

As examples of monomer having basic nitrogen copolymerizable with ethylene used in this invention, there can be referred to alkyleneimines such as ethyleneimine, propyleneimine, butyleneimine, 1,1-dimethylethyleneimine, 1,1-diethyl-2-methylethyleneimine and the like; vinylpyridines such as α-vinylpyridine, β-vinylpyridine, γ-vinylpridine, 2-methyl-5-vinylpyridine, 2-methyl-6-vinylpyridine, 2-isopropenylvinylpyridine and the like; vinyllactams such as vinylpyrrolidone, vinylcaprolactam and the like; N-vinylcarbazoles such

as N-vinylcarbazole, N-vinyl-1,2,3,4-tetrahydrocarbazole and the like; acrylamides such as acrylamide, N-methylacrylamide, N,N-dimethylacrylamide, N,N-diethylacrylamide, N-tert-butylacrylamide and the like; and aminoalkyl acrylates (The term "acrylates" includes acrylate and metacrylate, hereinafter) represented by the following general formula:

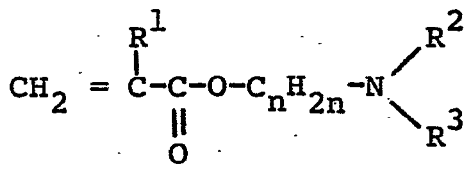

wherein $R^1$ represents hydrogen or methyl group; $R^2$ and $R^3$ represent hydrogen or alkyl group having 1-4 carbon atoms; and n represents an integer of 1-4. Among them, particularly preferable are N,N-dimethylaminoethyl methacrylate, N,N-diethylaminoethyl methacrylate, N,N-dimethylaminoethyl acrylate, N,N-diethylaminoethyl acrylate and the like.

Further, as mentioned in Japanese Patent Publication No. 3,372/80, modified polyethylene copolymers obtained by the addition reaction of a lower alkylamine compound to a copolymer of ethylene and glycidyl acrylate compound are also included in the object of this invention.

Said copolymer of ethylene and monomer having basic nitrogen are usually obtainable by continuously feeding ethylene and said monomer into

a reactor kept at a temperature ranging from 50°C to 300°C and at a pressure ranging from 300 atmospheres to 3,000 atmospheres together with a free radical catalyst or oxygen, as mentioned in Japanese Patent Publication No. 6,194/78. Chain transfer agent such as propane and the like may be used for the sake of regulating molecular weight.

Content of the monomer having basic nitrogen in said ethylene copolymer is 5-40% by weight, preferably 10-35% by weight. Melt index of said ethylene copolymer is 1-1,000, preferably 50-500. As said ethylene copolymer, there can also be used copolymers obtained by copolymerizing ethylene with the monomer having basic nitrogen and additionally with other copolymerizable monomer such as vinyl acetate, methyl acrylate, methyl methacrylate or other unsaturated ester in an amount of 20% by weight or less based on the copolymer.

In this invention, the copolymer of ethylene and monomer having basic nitrogen may be dyed with an anionic dyestuff directly. However, from the stand point of dyeing efficiency, it is more preferable to carry out the dyeing after previously mixing and kneading the copolymer with one or more metal salt(s) of organic carboxylic acid(s) in a molten state to give a composition. The amount of said metal salt is 1-30 parts by weight, preferably 5-20 parts by weight per 100 parts by weight of the copolymer.

In the sense of increasing the dye exhaustion,

it is preferable to make said copolymer or said composition into fine granule or powder by a method such as freeze-pulverization or the like prior to the dyeing.

As said metal salt of organic carboxylic acid, there can be used the salts formed between the metals belonging to group IA, group IIA and group IIIA (preferably group IA) of the periodic table and one carboxylic acid or a mixture of two or more carboxylic acids selected from the group consisting of various aliphatic carboxylic acids (preferably, higher aliphatic carboxylic acids having 10 or more carbon atoms), aromatic carboxylic acids and pyridine-carboxylic acids. As particularly preferable concrete examples of said salt, there can be referred to sodium stearate, potassium stearate, calcium stearate, aluminum stearate, sodium laurate, potassium laurate, calcium laurate, aluminum laurate, sodium myristate, sodium palmitate, sodium oleate, sodium benzoate, potassium benzoate, sodium phenylacetate, potassium phenylacetate, sodium p-tert-butyl-benzoate, potassium p-tert-butylbenzoate, aluminum p-tert-butylbenzoate, sodium salicylate, sodium terephthalate, sodium nicotinate, potassium nicotinate and the like.

As the thermoplastic resins to which this invention can be applied, polyolefins such as polyethylene, polypropylene, polybutene-1, poly-4-methylpentene-1, propylene-ethylene copolymer, propylene-ethylene-butene-1 copolymer, polybutadiene,

styrene-butadiene copolymer and the like can be referred to in the first place. Further, copolymers of ethylene and unsaturated esters having 4-8 carbon atoms (for example, vinyl acetate, methyl acrylate, methacrylate, ethyl acrylate and the like), their saponified products, modified polyolefins obtained by graft-modifying said polyolefins with a small quantity of unsaturated carboxylic acid or its anhydride, and mixtures of said modified polyolefins and olefins are also included herein.

In the second place, as thermoplastic resins other than said polyolefins and olefin copolymers, there can be referred to polyamide resins such as 6-nylon, 6.6-nylon and the like; polyester resins such as polyethylene terephthalate, polybutylene tete-phthalate and the like; styrene resins such as polystyrene, acrylonitrile-butadiene-styrene copolymer, acrylonitrile-styrene copolymer, methyl methacrylate-butadiene-styrene copolymer and the like; and other various resins such as polyvinyl chloride, polymethyl methacrylate, polyvinylbutyral and so on. Among these thermoplastic resins, polyolefins and olefin copolymers are preferable.

As the anionic dyestuff used in this invention, acid dyestuffs and metallized dyestuffs extensively used for dyeing nylon textile products and wool products are applicable. Further, in case that a copolymer of ethylene and an acrylamide is used or

in some other cases, disperse dyestuffs may also be used. The amount of dyestuff to be fixed onto said ethylene copolymer or said composition of the copolymer and metal salt of organic carboxylic acid is advisably 1-50 parts by weight, more preferably 5-40 parts by weight per 100 parts by weight of said copolymer or composition. As the dyeing methods, the same ones as applied to nylon textile products and wool products can be referred to, which include the heat-treatment under acidic condition in the presence of aqueous dyestuff solution, the dipping in aqueous dyestuff solution followed by steam-treatment, etc. In any of these cases, the dyeing is preferably carried out at a temperature not higher than the melting point of said copolymer or composition (usually 80-100°C) for a time period of 10-1000 minutes.

In this invention, said dyed product is added in an amount of 0.01-20 parts by weight, preferably 0.01-10 parts by weight per 100 parts by weight of thermoplastic resin.

In this invention, it is also possible and sometimes it is desirable to use one or more members selected from various additives such an antioxidant, ultraviolet absorber, plasticizer, antistatic agent, foaming agent and the like and various inorganic fillers such as glass fiber, calcium carbonate, talc, titanium oxide and the like in combination of appropriate quantities in accordance with usage, form

and shape of molded product and with the molding process, for the purpose of more effectively exhibiting the function of the molded product.

As the method for mixing said dyed product (B) and optionally added various additives and fillers into thermoplastic resin (A) in this invention, melting and kneading by means of extruder or Banbury mixer before molding can be employed. Aside from above, however, it is also possible to dry-blend them simply with Henschel mixer or the like and then to introduce the mixture directly into the feeder of molding machine.

According to this invention, a wide variety of molded products of thermoplastic resins made by molding such as spinning, stretching, extrusion, molding, blow molding, injection molding, pressure forming, vacuum forming and the like, such as fiber, rod, pipe, film, sheet, bottle, shaped article and so on, can be colored in a colorful manner. It is also possible to combine such a colored molded product with other material such as plastic, paper, glass, metal and the like to give a composite material or a laminate.

Hereunder, this invention will be illustrated with reference to examples in no limitative way.

Example 1

100 kg of a copolymer (melt index 98) of

N,N-dimethylaminoethyl methacrylate (28% by weight) and ethylene (72% by weight) and 15 kg of a dry mixture of sodium salts of higher fatty acids (5% by weight of sodium myristate, 30% by weight of sodium palmitate and 65% by weight of sodium stearate) were kneaded by means of Banbury mixer and then freeze-pulverized to obtain a powder having an average particle diameter of 550 microns. 1 kg of this powder, 20 kg of water, 100 g of acetic acid and 250 g of C.I. Acid Red 355, a metallized dyestuff were charged into a dyeing apparatus having a capacity of 40 liters. With stirring, they were heated to 80°C and kept at this temperature for 30 minutes, after which they were cooled, centrifuged, washed with water and dried to obtain a powdery dyed product (hereinafter, referred to as "dyed product A"). The percentage of dye exhaustion (weight of fixed dye/weight of charged dye) was 99% by weight or more.

Powdery dyed products B and C were also produced by repeating the above-mentioned procedure, except that C.I. Acid Red 355 was replaced with an equal weight of C.I. Acid Green 25, an acid dyestuff or C.I. Acid Yellow 110, an acid dyestuff. In any cases, the percentage of dye exhaustion was 99% by weight or more.

500 g of the above-mentioned dyed product A, B or C was added to 10 kg of powdery polypropylene (Noblen ® FL-800, melt index 9, manufactured by Sumitomo Chemical Co., Ltd.) together with 10 g of

Irganox (R) 1010 (phenolic stabilizer, manufactured by Ciba Geigy Co.) and 50 g of Tinuvin (R) 326 (benzotriazole type stabilizer, manufactured by Giba Geigy Co.) as stabilizers. After homogenizing the resulting mixture by means of Henschel mixer, it was subjected to a continuous spinning by means of a spinning machine of 25 mm diameter extruder equipped with a 12 hole (0.8 mm diameter) circular nozzle at a resin temperature of 260°C and at a wind-up speed of 300 m/minute for 1.5 hours. Then, by means of a continuous stretching machine, it was stretched at a temperature of 110°C, at a wind-up speed of 400 m/minute at a draw ratio of 3.

In any case of dyed products A, B and C, no breaking of filament took place at all at the time of spinning and stretching, and there were obtained a strand of 15 denier/filament quite excellent in surface gloss and having a color of red, green or yellow. These three kinds of filaments all had a light-fastness of 6th to 7th grade (JIS L-0842, carbon arc, 63°C, 80 hours) and a fastness to rubbing of 5th grade (JIS L-0849, crock meter, 10 times), so that they sufficiently fulfilled the necessary requirements as carpet.

The cross-sections of the filaments were photographically observed by means of a transmission type electronic microscope, and it was found that all the dyed products were uniformly dispersed with

an average particle diameter of 0.3 micron.

Example 2

A copolymer (melt index 250) of N,N-diethylaminoethyl methacrylate (25% by weight) and ethylene (75% by weight) was freeze-pulverized to obtain a powder having an average particle diameter of 480 microns. 1 kg of this powder, 20 kg of water and 30 g of salicylic acid were charged into a dyeing apparatus having a capacity of 40 liters. After heating them to 50°C with stirring, 300 g of C.I. Acid Blue 129, an acid dyestuff was added. The resulting mixture was kept at 70°C for 60 minutes with stirring and then cooled, centrifuged, washed with water and dried to obtain a powdery dyed product (hereinafter, referred to as "dyed product D").

A mixture consisting of 10 kg of ethylenepropylene random copolymer (Noblen ® W-131, content of copolymerized ethylene 3% by weight, melt index 7, manufactured by Sumitomo Chemical Co., Ltd.), 100 g of the above-mentioned dyed product D and 10 g of stabilizer BHT (phenolic stabilizer, manufactured by Sumitomo Chemical Co., Ltd.) was melted, kneaded and granulated by means of an extruder having a diameter of 30 mm at a resin temperature of 220°C. Subsequently, it was formed into three kinds of blue-colored plates having a longitudinal length of 20 cm and a thickness of 1 mm, 2 mm and 3 mm by means of a 4 ounce

injection molding machine at a resin temperature of 240°C. The plates were all good in both gloss and transparent feeling, and had a tensile breakdown strength (ASTM-D 638) of 420 $kg/cm^2$, a bending rigidity (ASTM-D 747) of 10,000 $kg/cm^2$ and an Izod impact strength (notched, ASTM-D 256) of 3 $kg\text{-}cm/cm^2$. Thus, they were not greatly different from the product containing no dyed product in mechanical properties, and were satisfactory from the practical point of view.

Example 3

100 kg of a terpolymer (melt index 170) of N,N-dimethylaminoethyl methacrylate (20% by weight), vinyl acetate (5% by weight) and ethylene (75% by weight) and 10 kg of dry sodium benzoate (a powder passing 200 mesh) were kneaded by means of Banbury mixer and then freeze-dried to obtain a powder having an average particle diameter of 770 microns. 1 kg of this powder, 25 kg of water, 70 g of formic acid and 150 g of C.I. Acid Orange 87, a metallized dyestuff were charged into a dyeing apparatus having a capacity of 40 liters, heated to 70°C with stirring, kept at this temperature for 50 minutes, cooled, centrifuged, washed with water and dried to obtain a powdery dyed product (hereinafter, referred to as "dyed product E"). The percentage of dye exhaustion was 99% by weight or more.

50 kg of polypropylene (Noblen ® FS 2011,

melt index 2, manufactured by Sumitomo Chemical Co., Ltd.), 800 g of the above-mentioned dyed product E, 20 g of Electrostripper TS-3 (manufactured by Kao Soap Co., Ltd.) as an antistatic agent and 10 g of Irganox ® 1010 (phenolic stabilizer, manufactured by Ciba Geigy Co.) as a stabilizer were mixed together by means of Henschel mixer. The mixture was melted, kneaded and granulated by means of an extruder having a diameter of 30 mm at a resin temperature of 220°C and then formed by means of an inflation film-making machine having a 40 mm diameter extruder at a resin temperature of 210°C and at a wind-up speed of 7 m/minute to obtain a yellow, transparent and glossy film having a thickness of 50 microns and a lay-flat width of 120 mm.

Further, this film was monoaxially stretched to 7 times its original length by means of a continuous stretching machine at a temperature of 135°C at a speed of 42 m/minute, after which it was slitted into 30 mm width and the two sheets, as superposed one over the other, were split to obtain split yarns of 2,400 denier.

Example 4

30 g of dyed product A obtained in Example 1, 30 g of dyed product E obtained in Example 3, 35 g of foaming agent Cellmic C (manufactured by Sankyo Kasei K.K.), 20 g of crosslinking agent Perkadox 14 (manufactured by Kayaku Noury K.K., concentration 40% by

weight) and 20 g of zinc stearate were added to 1 kg of ethylene-vinyl acetate copolymer (Evatate (R) D 2020, manufactured by Sumitomo Chemical Co., Ltd., content of copolymerized vinyl acetate 15% by weight, melt index 1.5). After homogenizing the mixture by means of Henschel mixer, it was placed in a metallic mold having a thickness of 10 mm, a length of 20 cm and a width of 20 cm, kept at a temperature of 170°C and a pressure of 100 kg/$cm^2$ for 15 minutes by means of a hot press and then taken out and cooled. Thus, an orange-colored cushion sheet constituted of dense and uniform foam cells was obtained.

Example 5

A copolymer (melt index 480) of N-vinylcarbazole (23% by weight) and ethylene (77% by weight) was freeze-pulverized to obtain a powder having an average particle diameter of 510 microns. 200 g of this powder, 4 kg of water and 5 g of sulfuric acid were charged into a 5 liter glass flask. After heating the mixture to 50°C with stirring and adding 40 g of C.I. Acid Red 249, an acid dyestuff thereto, the mixture was kept at 65°C for 60 minutes and thereafter cooled, centrifuged, washed with water and dried to obtain a powdery dyed product (hereinafter, referred to as "dyed product F").

A granular copolymer (melt index 80) of vinyl acetate (42% by weight) and ethylene (58% by weight) was

stirred in methanol in the presence of sodium hydroxide catalyst at 70°C under a pressure of 1.5 kg/cm$^2$ G for 10 hours to obtain a granular saponified product (rate of saponification 98%, melt index 29). A mixture consisting of 2 kg of the saponified product, 100 g of the above-mentioned dyed product F and 200 g of powdery titanium oxide was melted, kneaded and granulated by means of an extruder having a diameter of 25 mm at a resin temperature of 140°C and then freeze-pulverized and classified by means of sieve to obtain a fine powder of 42 mesh pass.

A steel plate (3 mm in thickness, 10 cm in length, 5 cm in width; surface-treated by sandblasting and defatted with acetone) preheated at 280°C was dipped in a fluidized bed consisting of the above-mentioned fine powder for 5 seconds and then it was cooled to obtain a pink-colored coated plate having a smooth and flat surface and a good gloss. It was entirely free from unevenness of coloration.

Example 6

100 kg of a copolymer (melt index 400) of N-N-dimethylaminoethyl methacrylate (30% by weight) and ethylene (70% by weight) and 15 kg of a dry mixture of sodium salts of higher fatty acids (5% by weight of sodium myristate, 30% by weight of sodium palmitate and 65% by weight of sodium stearate) were kneaded together by means of a Banbury mixer and

then freeze-pulverized to obtain a powder having an average particle diameter of 550 microns.

1 kg of this powder, 10 kg of water, 100 g of acetic acid and 250 g of C.I. Acid Blue 129, an acid dyestuff were charged in a dyeing apparatus having a capacity of 40 liters, heated to 70°C with stirring, kept at this temperature for 60 minutes, cooled to 50°C, centrifuged, washed with water and dried to obtain a powdery dyed product. The percentage of dye exhaustion was 99% by weight or more.

10 g of the dyed product, 2 kg of the thermoplastic resin shown in Table 1 and 2 g of Irganox R 1010 (phenolic stabilizer, manufactured by Ciba Geigy Co.) as a stabilizer were mixed together by means of a mixing and grinding machine, vacuum-dried at 80°C for 2 hours and then processed into 150 µ film by means of a T-die film-making machine (extruder having a diameter of 20 mm, 100 mm width T-die apparatus) under the conditions shown in Table 1.

The films thus obtained showed a clear blue color and were good in uniformity.

Table 1

| Kind of resin | Grade | |
|---|---|---|
| Low density polyethylene | Sumikathene ® F-401 | |
| High density polyethylene | Sholex ® F-6080 FL | |
| Ethylene-vinyl acetate copolymer | Evatate ® H-4021 | |
| Saponified product of ethylene-vinyl acetate copolymer | Sumilink ® DR-55 | |
| Polystyrene | Esbrite ® NO 8 | |
| ABS resin | Kralastic ® K-3272 | |
| Nylon 6 | Amilan ® CM-1017 | |
| Nylon 66 | Amilan ® CM-3001 N | |
| Polymethyl methacrylate | Sumipex ® B MHG | |
| Polybutadiene | JSR-RB-820 | |
| Polybutylene terephthalate | PBT Resin 1401 | |
| Polypropylene | Sumitomo Noblen ® FL-600 | |

Note: ◎ = Very good

○ = Good

Continued ...

Table 1 (Cont'd)

| | Maker | Processing condition (Resin temperature) °C | State of film | |
|---|---|---|---|---|
| | | | Dispersibility | Color tone |
| | Sumitomo Chemical Co., Ltd. | 180 | ◎ | ◎ |
| | Showa Denko K.K. | 200 | ◎ | ◎ |
| | Sumitomo Chemical Co., Ltd. | 120 | ◎ | ◎ |
| | Sumitomo Chemical Co., Ltd. | 150 | ◎ | ◎ |
| | Nippon Polystyrene K.K. | 230 | ○ | ○ |
| | Sumitomo Naugatuck K.K. | 230 | ○ | ○ |
| | Toray K.K. | 245 | ○ | ◎ |
| | Toray K.K. | 245 | ○ | ◎ |
| | Sumitomo Chemical Co., Ltd. | 250 | ○ | ○ |
| | Japan Synthetic Rubber Co., Ltd. | 150 | ◎ | ◎ |
| | Toray K.K. | 250 | ○ | ○ |
| | Sumitomo Chemical Co., Ltd. | 210 | ◎ | ◎ |

Comparative Example 1

870 g of the same mixture of ethylene copolymer and sodium salt of higher fatty acid as used in Example 1 and the same kind and amount of stabilizer as used in Example 1 were mixed into 10 kg of the same polypropylene powder as used in Example 1 and kneaded by means of Henschel mixer and then spun and stretched with the same machine and under the same conditions as in Example 1 to obtain a colorless strand of 15 denier/filament.

10 g of this filament sample was dipped in 600 g of water and the temperature was elevated up to 50°C with gentle stirring. When the temperature had reached 50°C, 0.5 g of acetic acid and 0.2 g of the same dyestuff as used in Example 1 were added. Then, the mixture was heated to 100°C and boiled for 30 minutes, after which the filament sample was taken out and washed with water. Subsequently, it was soaped with 600 g of 0.2% (by weight) solution of Monogen® (higher fatty acid sulfuric ester type surfactant, manufactured by Dai-ichi Kogyo Seiyaku Co., Ltd.) at 60°C for 5 minutes, and then again washed with water and dried to obtain a filament sample dyed red. The ultimate percentage of dye exhaustion of this dyed filament was 64%. As measured by the same methods as in Example 1, its light fastness was 2nd grade and its fastness to rubbing was 3rd grade which did not satisfy the necessary conditions for, for example, carpet.

Comparative Examples 2 and 3

Filament samples dyed green and yellow, respectively, were prepared by the same method and under the same conditions as in Comparative Example 1, except that the dye used in Comparative Example 1 was replaced with C.I. Acid Green 25 and C.I. Acid Yellow 110, respectively. In these dyed filaments, the ultimate percentage of dye exhaustion was 77% and 84%, the light fastness was 4th grade and 5th grade, and the fastness to rubbing was 3rd grade and 3rd grade.

It is apparent from the comparison of the above-mentioned Example 1 with Comparative Examples 1, 2 and 3 that, when the amount of dye ultimately contributing to coloration is on the same level, fastness to light and fastness to rubbing are both markedly better when a quaternary salt composition is previously made by reacting tertiary amine site with a dyestuff and then it is mixed and kneaded into polypropylene than when polypropylene is firstly spun and then dyed.

CLAIMS:-

1. A process for producing a colored molded product of thermoplastic resin which comprises mixing (A) 100 parts by weight of a thermoplastic resin and (B) 0.01-20 parts by weight of a dyed product obtained by dyeing a copolymer of ethylene and one or more monomer(s) having basic nitrogen copolymerizable with ethylene and thereafter molding the resulting mixture.

2. A process according to claim 1, wherein said monomer having basic nitrogen copolymerizable with ethylene is an aminoalkyl acrylate compound represented by the following general formula:

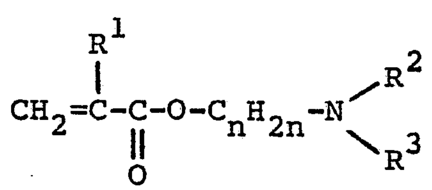

wherein $R^1$ represents hydrogen or methyl group; $R^2$ and $R^3$ represent hydrogen or alkyl group having 1-4 carbon atoms; and n represents an integer of 1 to 4.

3. A process according to claim 1 or 2 in which the said copolymer is mixed with a metal salt of an organic acid before dyeing.

4. A process according to claim 3 in which the metal is selected from group lA, llA or lllA.

5. A process according to claim 3 or 4 wherein said organic carboxylic acid is one member or an acid mixture of two or more members selected from the group consisting of higher aliphatic carboxylic acids having 10 or more carbon atoms, aromatic carboxylic acids and pyridine-carboxylic acids.

6. A process according to any of claims 1 to 5 wherein said thermoplastic resin is a polyolefin or an olefin copolymer

7. A process according to any of claims 1 to 6 in which the dye is an anionic dye.

8. A process according to claim 7 in which the dye is an acid dyestuff.

9. A process according to any of claims 1 to 6 in which the dye is a disperse dye.

10. A process for producing a colored molded product substantially as hereinbefore described with reference to and as illustrated in the foregoing examples.

European Patent Office

# EUROPEAN SEARCH REPORT

0050501

Application number

EP 81 30 4857

## DOCUMENTS CONSIDERED TO BE RELEVANT

| Category | Citation of document with indication, where appropriate, of relevant passages | Relevant to claim |
| --- | --- | --- |
| Y | US - A - 4 113 505 (N. BELLANCA)<br>* Column 1, line 16 - column 5, line 45 *<br>-- | 1,10 |
| Y | US - A - 3 395 198 (I. TANIGUCHI)<br>* Column 1, line 54 - column 5, line 44 *<br>-- | 1-10 |
| A | DE - A - 2 042 496 (BADISCHE ANILIN- & SODA-FABRIK)<br>* Claim 1 *<br>-- | 1 |
| A | FR - A - 2 113 711 (E.I. DU PONT DE NEMOURS)<br>* Page 1, lines 5-30 *<br>-- | 1 |
| A | DE - A - 1 669 651 (BADISCHE ANILIN- & SODA-FABRIK)<br>* Claim 1 *<br>---- | 1 |

**CLASSIFICATION OF THE APPLICATION (Int. Cl. 3)**

C 08 J 3/22
C 08 L 23/02

**TECHNICAL FIELDS SEARCHED (Int.Cl. 3)**

C 08 L 101/00
23/00
C 08 J 3/22

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
| --- | --- | --- |
| The Hague | 03-02-1982 | GOOVAERTS |